# FASCICULE DE BREVET EUROPEEN

(11) **EP 3 380 714 B1**
(45) Date de publication et mention de la délivrance du brevet: **19.05.2021**
(21) Numéro de dépôt: 16809134.6
(22) Date de dépôt: 09.11.2016
(51) Int. Cl.: F02M 37/00, F02M 55/04, F16L 55/052

(54) **DISPOSITIF AMORTISSEUR DE PULSATIONS D'ALIMENTATION EN LIQUIDE D'UN ORGANE DE VÉHICULE**
VORRICHTUNG ZUR DÄMPFUNG VON SCHWANKUNGEN IN DER FLÜSSIGKEITSZUFUHR ZU EINEM FAHRZEUGBAUTEIL
DEVICE FOR DAMPING SURGE IN THE SUPPLY OF LIQUID TO A VEHICLE COMPONENT

(30) Priorité: 25.11.2015 FR 1561362
(43) Date de publication de la demande: 03.10.2018
(73) Titulaire: Renault S.A.S., 92100 Boulogne-Billancourt (FR)
(72) Inventeur: SERBAN, Florin-Mihail, 91440 Bures sur Yvette (FR)
(86) Numéro de dépôt international: PCT/FR2016/052908
(87) Numéro de publication internationale: WO 2017/089673

(56) Documents cités:
- WO-A1-00/11344
- WO-A1-2012/072159
- DE-A1-102013 218 878
- US-A- 6 148 798
- US-A1- 2008 127 941

## Description

L'invention concerne un dispositif amortisseur de pulsations d'alimentation en liquide d'un organe de véhicule, notamment d'alimentation en carburant d'un groupe motopropulseur dans un véhicule automobile.

On connaît déjà différents dispositifs amortisseurs de pulsations d'alimentation en liquide d'un organe de véhicule.

Par exemple le document WO2012/072159 divulgue un amortisseur de pulsation de fluide comprenant une chambre qui, à l'exception de sections tubulaires d'alimentation, est fermée et dans laquelle deux ouvertures de conduites de fluide pénétrant dans la chambre sont tournées vers le fond de la chambre. Le parcours très court du fluide dans la chambre a pour inconvénient de ne procurer qu'un amortissement qui repose sur de simples alternances de compression et de décompression d'une poche de gaz qui surplombe le liquide. Le changement de direction du fluide à 180° provoqué par le fond de la chambre, génère des problèmes de contraintes mécaniques et d'encombrement, notamment pour une installation dans un compartiment moteur de véhicule.

Le document FR 2 738 038 divulgue un amortisseur de pulsations de carburant comprenant deux chambres dans un boîtier unique. Une première chambre y est traversée par le carburant acheminé du réservoir jusqu'à une rampe d'injection dans le moteur. Une deuxième chambre y est traversée par le carburant non consommé, réacheminé vers le réservoir depuis la rampe d'injection. Le boîtier unique a pour but de faire communiquer les deux chambres afin de maintenir du carburant entre l'amortisseur de pulsations et les injecteurs du moteur. Ce type de dispositif a pour inconvénient de n'être utilisable que dans un cas particulier où une seule pompe immergée dans le réservoir, est censée assurer une pression suffisante au niveau des injecteurs. Il ne convient pas à la mise en place d'une deuxième pompe entre l'amortisseur de pulsation et les injecteurs pour assurer une haute pression d'injection dans le moteur.

Par la publication DE 10 2013 218878, on connaît un autre amortisseur de pulsations, comprenant, un réservoir disposé dans un système d'alimentation basse pression, avec une chambre de fluide et une chambre de gaz, qui présente aussi ces inconvénients.

Pour remédier aux inconvénients de l'état antérieur de la technique, l'invention a pour objet un dispositif amortisseur de pulsations d'alimentation en liquide d'un organe de véhicule comprenant un premier boîtier qui comporte une entrée d'alimentation pour recevoir le liquide et une sortie d'alimentation pour fournir le liquide reçu dans une conduite d'alimentation de l'organe de façon à amortir les pulsations dans la conduite. Le dispositif comprend un deuxième boîtier distinct dudit premier boîtier et qui comporte une entrée de récupération pour recevoir une portion de liquide non utilisé par l'organe et une sortie de récupération pour permettre de réutiliser la portion de liquide reçue.

Notamment le premier boîtier comporte une partie supérieure dans laquelle peut se former une poche de gaz au-dessus du liquide reçu, alternativement comprimée et décomprimée par lesdites pulsations.

Particulièrement, le deuxième boîtier comporte une partie supérieure dans laquelle débouchent l'entrée de récupération et la sortie de récupération.

Plus particulièrement, la partie supérieure comprend un moyen de fixation sur un support de suspension de l'organe alimenté.

Avantageusement, le premier boîtier comporte une partie inférieure dans laquelle débouche l'entrée d'alimentation sur une première paroi verticale et dans laquelle débouche la sortie d'alimentation, sur une deuxième paroi verticale connexe à la première paroi verticale.

Particulièrement, le premier boîtier comporte une troisième paroi adossée au deuxième boîtier.

Particulièrement aussi le premier boîtier contient un premier muret relié à une arrête du boîtier, commune à la première paroi verticale et à la deuxième paroi verticale de façon à empêcher le liquide reçu par l'entrée d'alimentation de sortir directement par la sortie d'alimentation.

Plus particulièrement, la partie supérieure contient un deuxième muret en prolongement vertical du premier muret.

De préférence, la partie inférieure comprend un moyen de fixation sur l'organe alimenté.

Particulièrement, le deuxième boîtier comprend une partie inférieure solidaire de la partie inférieure du premier boîtier.

Avantageusement, la partie supérieure du premier boîtier est solidaire de la partie supérieure du deuxième boîtier.

Chaque boîtier peut être obtenu par soudure laser de deux coquilles produites par injection de polyamide, de préférence de type PA6.

L'invention a aussi pour objet un véhicule automobile dans lequel l'organe en question est un moteur, le véhicule comprenant un dispositif amortisseur de pulsations comprenant tout ou partie des caractéristiques ci-dessus énoncées pour alimenter le moteur en carburant.

D'autres caractéristiques et avantages de l'invention apparaitront à la lecture de la description qui suit d'un exemple de réalisation d'un procédé et d'un dispositif conformes à l'invention en référence aux dessins annexés, dans lesquels :
- la figure 1 illustre le dispositif amortisseur selon l'invention dans son contexte de mise en œuvre ;
- la figure 2 est une vue en perspective du dispositif amortisseur extrait de son contexte ;
- la figure 3 est une vue de dessus du dispositif amortisseur représenté en figure 2 ;
- la figure 4 est une vue de dessus du dispositif remis dans son contexte d'utilisation ;
- la figure 5 est une vue de dessus en perspective de la partie inférieure du dispositif;
- la figure 6 est une vue de dessous en perspective de la partie supérieure du dispositif amortisseur selon l'invention.

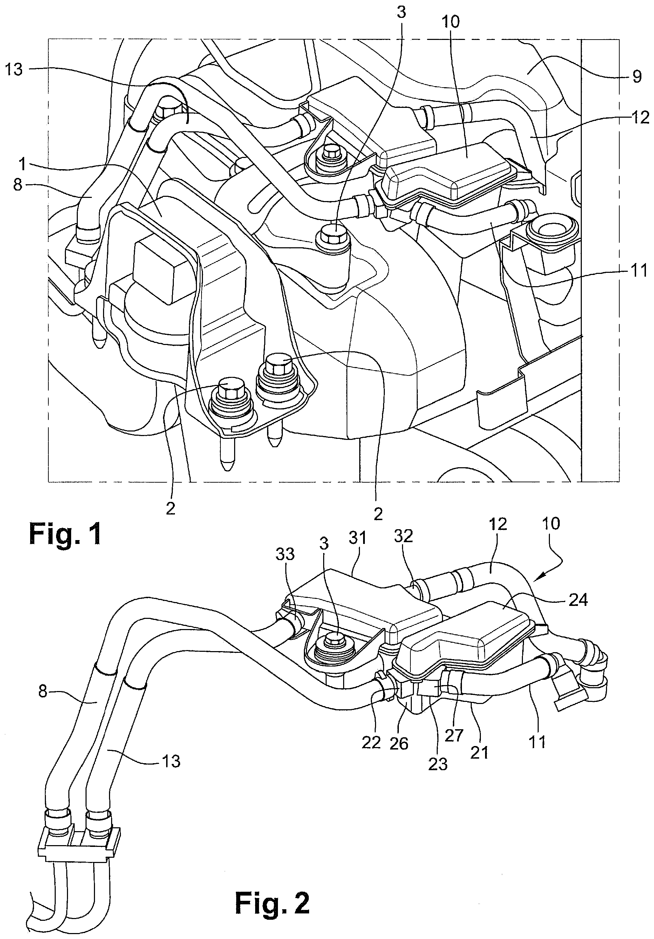

La figure 1 montre un dispositif 10 amortisseur de pulsations d'alimentation en liquide d'un organe 9 de véhicule, notamment de véhicule automobile dans lequel l'organe 9 est à titre illustratif un moteur thermique et le liquide est le carburant consommé par le moteur. De façon conventionnelle, un support 1 de suspension d'un groupe motopropulseur comprenant le moteur 9 et une boîte de vitesse, est fixé à la caisse du véhicule par des vis 2. La boîte de vitesses est fixée par exemple au support 1 de suspension du groupe motopropulseur, par une ou plusieurs vis 3. Une première conduite 8 d'alimentation en liquide relie un réservoir de liquide au dispositif 10. Une deuxième conduite 11 relie le dispositif 10 au moteur. Au retour, une première conduite 12 de récupération, relie le moteur au dispositif 10 et une deuxième conduite 13 de récupération, relie le dispositif 10 au réservoir dans lequel est retourné toute portion de liquide non utilisée par l'organe.

Plus précisément dans le cas particulièrement utile où l'organe en question est un moteur thermique comme illustré par l'exemple de mise en œuvre de la figure 1, une pompe basse pression immergée dans le réservoir de carburant envoie le carburant sous forme liquide dans la conduite 8, puis à travers le dispositif 10 dans la conduite 11 jusqu'à une pompe haute pression (non représentée) qui transmet le carburant à une rampe d'injection du moteur en permanence à haute pression. Le carburant non utilisé par le moteur est évacué dans la conduite 12 de récupération à destination du réservoir en passant par le dispositif 10 et la conduite 13.

On sait dans le domaine technique considéré, que de par sa nature, la pompe haute pression génère des pulsations dans les conduites d'alimentation qui, lorsqu'elles rentrent en résonnance avec la structure, sont sources de bruit.

De façon à amortir les pulsations dans la conduite 11, le dispositif 10 comprend un premier boîtier 21 plus facilement visible en figure 2. Le boîtier 21 comporte une entrée 22 d'alimentation pour recevoir le liquide et une sortie 23 d'alimentation pour fournir dans la conduite 11 d'alimentation du moteur, le liquide reçu.

Le premier boîtier 21 comporte une partie supérieure 24 dans laquelle peut se former une poche de gaz au-dessus du liquide reçu qui, alternativement comprimée et décomprimée par les pulsations, en absorbe l'énergie de sorte que les pulsations de la conduite 11 sont amorties. Ainsi le premier boîtier fait obstacle à la propagation des pulsations dans le liquide jusqu'au réservoir.

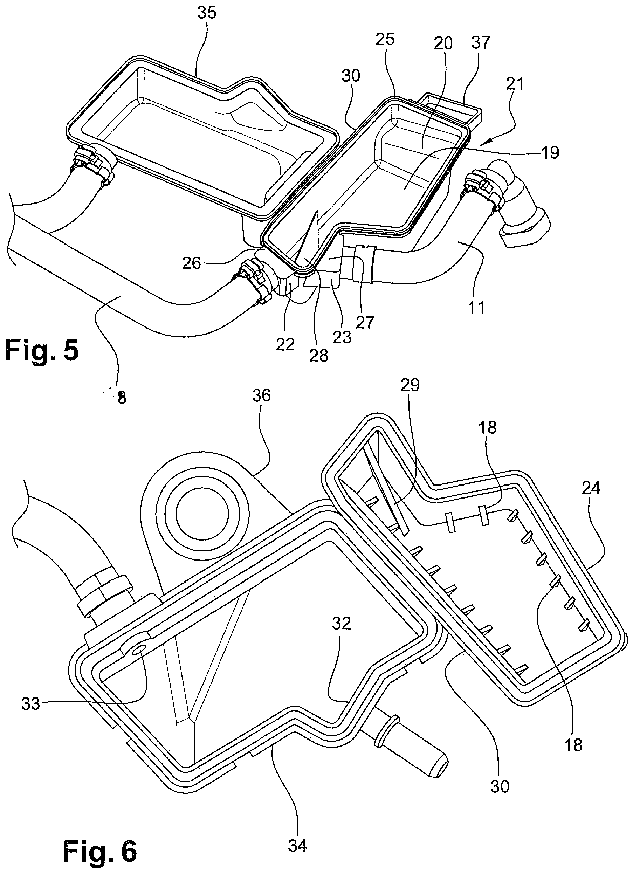

Dans le mode particulier de mise en œuvre de l'invention illustré par les figures 5 et 6, le premier boîtier 21 comporte une partie inférieure 25 dans laquelle l'entrée 22 d'alimentation débouche sur une première paroi essentiellement verticale 26 de sorte qu'un flux sensiblement horizontale de liquide pénètre dans le boîtier 21. La sortie 23 d'alimentation débouche sur une deuxième paroi essentiellement verticale 27 connexe à la première paroi verticale 26. Il en résulte une disposition des conduites 11 et 13 dans un plan sensiblement parallèle au plan défini par les axes du train avant et du train arrière du véhicule, de nature considérée horizontale dans la suite de la description, ce qui correspond à la majorité des cas de fonctionnement du véhicule, notamment sur une chaussée horizontale aux écarts près de pente tant qu'ils restent dans les limites de ce qu'on constate habituellement sur les routes. Cette disposition des conduites 11 et 13, facilite la mise en place du boîtier par le dessus du compartiment moteur et réduit de façon notable l'encombrement du dispositif. D'autre part, l'entrée 22 et la sortie 23 qui débouchent sur sensiblement un même niveau, favorisent un remplissage prioritaire de la partie inférieure 25 du boîtier 21.

Les dimensions de la partie inférieure 25 du boîtier 21 dans le plan horizontal sont supérieures à celles de sa hauteur. Le boîtier 21 contient un premier muret 28 en partie basse. Le muret 28 est relié à une arrête du boîtier 21 qui est commune à la première paroi verticale 26 et à deuxième paroi verticale 27, de façon à empêcher le liquide reçu par l'entrée 22 d'alimentation de sortir directement par la sortie 23 d'alimentation. Dans l'exemple illustré par la figure 5, le muret 28 est perpendiculaire au plan horizontal et orienté vers une troisième paroi 30 en face de la deuxième paroi verticale 27, en laissant un passage suffisant à l'écoulement du liquide le long de la paroi 30. De la sorte, le liquide a tendance à cheminer longuement dans le boitier 21 avant de rejoindre la sortie 23, notamment en longeant les parois, avec pour effet de dissiper les vibrations, et par conséquent la propagation du son, dans le cheminement du liquide entrant et sortant au contact du liquide contenu dans la chambre constituée par le boîtier 21.

Dans l'exemple de réalisation illustré par la figure 5, les parois 26, 27, 30 sont d'épaisseur et de hauteur sensiblement constante. La première paroi verticale 26 est de largeur juste suffisante à l'accouplement de la conduite 13 sur la partie inférieure 25 du boîtier 21. La deuxième paroi verticale 27 comporte une première face très proche de la première paroi verticale 26 à l'endroit de l'arrête commune à ces deux parois, orientée de façon à laisser un passage suffisant au liquide contre le muret 28 avant de pénétrer dans la sortie 23. Cette première face est, de préférence de largeur juste suffisante à l'accouplement de la conduite 11 sur la partie inférieure 25 du boîtier 21. La deuxième paroi verticale 27 comporte dans le prolongement de la première face, une deuxième face sensiblement parallèle à un premier tronçon de la conduite 11 en sortie du boîtier 21 de façon à s'éloigner de la troisième paroi 30 puis une troisième face sensiblement parallèle à un deuxième tronçon de la conduite 11 en sortie du boîtier 21 de façon à se rapprocher de la paroi 30. Les parois 26, 27, 30 ont des arrêtes communes deux à deux de façon ceindre une chambre de réception du liquide, avec si besoin est, une quatrième face de la deuxième paroi verticale 27 qui vient toucher la troisième paroi verticale 30.

Dans l'exemple de réalisation illustré par la figure 5, la quatrième face de la deuxième paroi verticale 27 en vis-à-vis de la première paroi verticale 26 à l'opposé du boîtier 21, présente une forme en escalier avec un plan 20 sensiblement parallèle au fond du boîtier 21, de sorte que la partie inférieure 25 du boîtier 21, est ouverte en niveau haut avec une surface supérieure à celle du fond en niveau bas qui ferme le boîtier. Nous verrons un effet technique bénéfique à ce plan 20 lors de la description ci-après du fonctionnement du premier boîtier.

La partie supérieure 24, en vue de dessous sur la figure 6, comporte une forme ouverte appariée au niveau haut de la partie inférieure 25 du boîtier 21 de manière à réaliser un couvercle en retournant la partie supérieure 24 sur la partie inférieure 25. La forme ouverte de l'une des parties comporte un bord de contact muni d'un joint prévu pour épouser un sillon pratiqué dans un bord correspondant de la forme ouverte de l'autre partie de manière à réaliser une étanchéité du premier boîtier 21 après accouplement de la partie supérieure 24 sur la partie inférieure 25.

Le joint n'est pas nécessairement constitué d'un élément rapporté comme c'est par exemple le cas pour un joint torique en matériau élastomère. Il est possible de réaliser le joint sous forme d'une nervure dimensionnée pour entrer en force dans le sillon de la partie opposée. Selon le procédé de fabrication employé comme nous le verrons par la suite, on peut même envisager deux parties plates ajustées pour assurer un bon contact avant d'être collée ou soudée l'une sur l'autre.

La partie supérieure 24 contient un deuxième muret 29 qui vient se mettre en prolongement vertical du premier muret 28 lorsque la partie supérieure 24 est positionnée sur la partie inférieure 25. Ainsi le liquide ne peut pas chercher à passer par-dessus le muret 28 pour aller de l'entrée 22 à la sortie 23.

Dans le mode particulier de mise en œuvre présenté sur la figure 5, le fond du boîtier 21 est parcouru par un réseau de nervures 19 visible sous l'aspect d'un quadrillage. Les nervures 19 permettent de rigidifier la partie inférieure 25, notamment lorsqu'elles se prolongent sur les parois 26, 27, 30. On retrouve ici aussi des nervures 18 partant en saillie des parois latérales de la partie supérieure 24 pour rejoindre la paroi de couverture dans le coin périmétrique que fait la paroi de couverture avec les parois latérales. Les nervures sur la paroi de fond de la partie inférieure 25 ont aussi un effet technique intéressant que nous comprendrons mieux dans l'explication du fonctionnement exposé maintenant.

Le boîtier 21 assemblé, fonctionne de la manière suivante. Le liquide, notamment le carburant acheminé de manière conventionnelle dans la conduite 13 depuis le réservoir par une pompe basse pression, l'un et l'autre non représentés ici, pénètre dans le boîtier 21 par l'entrée 22 ménagée dans la première paroi verticale 26. Le liquide est dévié par le muret 28 vers la troisième paroi 30 qu'il a tendance à longer pour mieux se répartir dans l'ensemble au moins de la partie inférieure 25 du boîtier 21, notamment en ayant tendance à longer les faces de la deuxième paroi verticale 27 jusqu'à aboutir à la sortie 23 ménagée dans la première face de la deuxième paroi verticale 27 à proximité de l'entrée 22 mais séparée de cette dernière par le muret 28 prolongé en hauteur par le muret 29. Ainsi, c'est après s'être dispersé au moins dans la partie inférieure 25 du boîtier 21 que le liquide, notamment le carburant, est acheminé dans la conduite 11 à destination d'une pompe haute pression, non représentée car déjà connue par ailleurs dans le domaine technique considéré.

On sait déjà que la pompe haute pression, de par sa nature, génère des alternances d'élévations et de baisses infinitésimales de pression, comme c'est de cas par exemple des pompes à membrane. Ces alternances d'élévations et de baisses de pression, aussi faibles soient-elles par rapport à la pression produite en amont par la pompe basse pression, engendrent des ondes sonores qui se propagent dans le liquide, notamment en remontant le courant du liquide dans la conduite 11. En absence du boîtier 21, ses ondes sonores se propageraient jusqu'au réservoir à l'entrée duquel elles provoqueraient des vibrations qui, communiquées à la caisse du véhicule à laquelle est fixé le réservoir, deviendraient sources de bruit comme on peut l'observer sur des véhicules non munis du dispositif 10 conforme à l'invention.

Sur un véhicule muni du dispositif 10 conforme à l'invention, les ondes sonores sont dispersées dans le boîtier 21 lorsqu'elles y pénètrent par la sortie 23 en sens inverse de l'écoulement du liquide. La disposition de l'entrée 22 et de la sortie 23 en regard l'une de l'autre en partie inférieure 21 du boîtier, favorise naturellement une formation de poche de gaz piégée en partie supérieure 24 du boîtier par le liquide qui empêche le gaz, typiquement de l'air, de sortir tant par l'entrée 22 que par la sortie 23. Le liquide étant considérablement moins compressible que le gaz, l'interface liquide gaz crée une rupture d'impédance acoustique favorable à l'amortissement du bruit comme cela est déjà connu de dispositifs existants. Cependant les ondes sonores rémanentes dans le gaz peuvent provoquer dans les dispositifs existants, des vibrations du boîtier qui, si le boîtier est fixé à la caisse du véhicule, risque de produire du bruit par mise en résonnance de la caisse. Ce risque est considérablement dans le dispositif 10 ici présenté grâce au fait que la partie inférieure 25 comprend un moyen 37 de fixation du boîtier sur l'organe alimenté. Notamment, lorsque l'organe alimenté est un moteur de véhicule automobile, le moyen 37 de fixation permet d'alimenter en carburant le moteur en fixant le dispositif amortisseur de pulsations sur le moteur lui-même. Le moteur constituant généralement une source de vibrations bien plus puissante que la pompe haute pression, le véhicule peut ainsi bénéficier d'un enfouissement des éventuelles vibrations communiquées au boîtier dans celles du moteur dont l'ensemble est filtré par le support 1 de suspension du groupe motopropulseur.

Le boîtier 21 possède aussi une particularité qu'on ne retrouve pas dans les dispositifs antérieurement connus, à savoir celle de procurer un effet tranquillisant comparable à celui que présente un lac à l'égard des cours d'eau qui viennent s'y écouler.

La capacité du boîtier 21 est supérieure ou égale à 50 cm³, par exemple de 80 cm³, par conséquent de valeur plus élevée que celle du volume de la conduite 11. L'effet volume permet de casser la propagation de l'onde générée par la pompe haute pression du moteur. Le muret 28 assure une circulation du liquide dans un maximum de la capacité.

Le dispositif 10 amortisseur de pulsations d'alimentation en liquide d'organe de véhicule, notamment de moteur de véhicule automobile comprend un deuxième boîtier 31 qui comporte une entrée 32 de récupération pour recevoir une portion de liquide non utilisé par l'organe et une sortie 33 de récupération pour permettre de réutiliser la portion de liquide reçue, notamment en renvoyant le liquide dans le réservoir d'où il est puisé par la pompe basse pression.

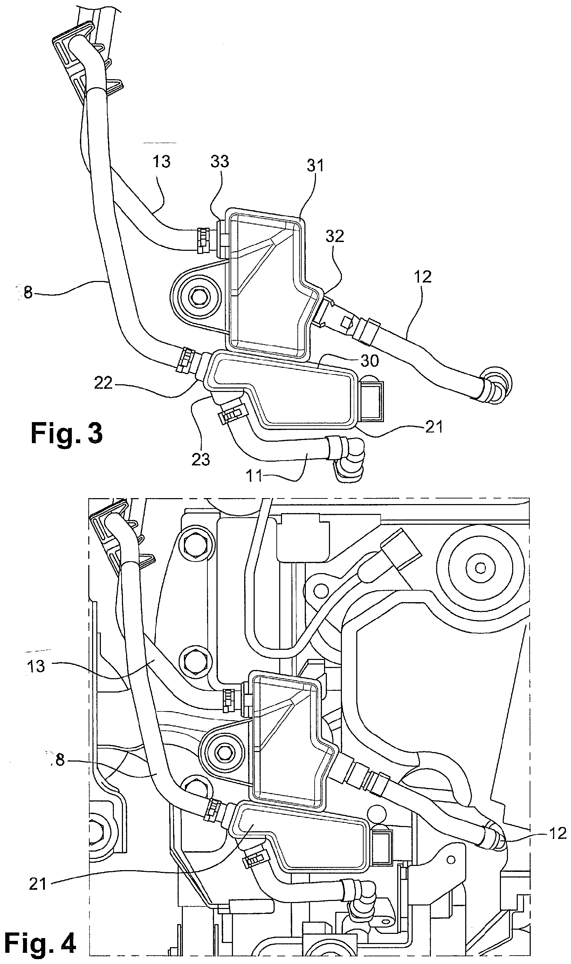

Selon l'invention, le deuxième boîtier est distinct du premier boîtier comme c'est le cas sur la figure 3, il comporte une paroi accolée à la paroi 30 du premier boîtier 21 de telle sorte que le sens de circulation du liquide de l'entrée 32 vers la sortie 33 dans le boîtier 31, est inversé par rapport au sens de circulation dans le boîtier 21 le long de la paroi 30 au niveau de la pénétration du liquide par l'entrée 22. Ainsi, les flux de liquide, notamment de carburant dans les sens alimentation et retour passent dans la double capacité en sens inverse l'un de l'autre de façon à diminuer les risques de transmission de vibrations sur la paroi 30, et par conséquent tant sur le boîtier 21 que sur la conduite 13, qui pourrait résulter de la propagation de l'onde sonore dans le boîtier 21. De la sorte, la troisième paroi 30 adossée au deuxième boîtier 31, met le premier boîtier 21 en contact avec un volume de liquide supplémentaire qui est celui du boîtier 31.

La capacité du deuxième boîtier 31 a une valeur proche, voire identique à celle du premier boîtier 21, par exemple à titre purement illustratif et non limitatif de l'ordre de 80 cm³ pour indiquer un ordre de grandeur performant. La double capacité acoustique ainsi constituée, est embarquée sur les conduites 8, 11, 12, 13 notamment lorsque, comme dans l'exemple illustré par les figures, elles constituent des canalisations carburant en alimentation du moteur et en retour vers le réservoir du carburant non utilisé par la rampe d'injection du moteur connue par ailleurs et non représentée ici.

Le deuxième boîtier 31 comporte une partie supérieure 34 dans laquelle débouchent l'entrée 32 et la sortie 33 de récupération de liquide non utilisé en retour vers le réservoir. Contrairement au boîtier 21 dans lequel l'entrée 22 et la sortie 23 en partie inférieure favorisait la formation d'une poche de gaz au-dessus du liquide, l'entrée 32 et la sortie 33 en partie supérieure du boîtier 31, favorise l'expulsion du gaz au-dessus du liquide vers le réservoir par la conduite 8 de sorte que le boîtier 31 est occupé par du liquide tant en partie inférieure 35 qu'en partie supérieure 34.

La partie supérieure 34 comprend un moyen 36 de fixation sur le support de suspension de l'organe alimenté par une ou plusieurs vis 3.

Dans l'exemple illustré par la figure 5, la partie inférieure 35 du deuxième boîtier 31, est solidaire de la partie inférieure 25 du premier boîtier 21. Dans l'exemple illustré par la figure 6, la partie supérieure 24 du premier boîtier est solidaire de la partie supérieure 34 du deuxième boîtier.

La mise en place de la double capacité acoustique qui vient d'être expliquée, permet d'annuler la transmission à la caisse du véhicule, des pulsations de la pompe située sur le moteur pour produire la haute pression utilisée par la rampe d'injection de carburant.

Pour fabriquer la pièce du dispositif 10 constituée des deux boîtiers 21, 31, on produit quatre coquilles par injection de polyamide, de préférence de type PA6 pour ses qualités de tenue mécanique. Comparé par exemple à un polyamide de type PA12 qui peut supporter une température de 100 °C à 120°C, un polyamide de type PA6 peut supporter une température de 220°C, mieux appropriée dans un environnement relativement chaud comme peut l'être celui d'un moteur. Chaque coquille correspond à une partie de boîtier. Chaque boîtier est obtenu par soudure laser de deux coquilles avant assemblage des deux boîtiers. Si besoin on peut envisager une mise en place de composants type mousse, mécanisme à ressort, caoutchouc ou autre améliorer encore la fonction d'amortissement.

## Revendications

1. Dispositif (10) amortisseur de pulsations d'alimentation en liquide d'un organe de véhicule comprenant un premier boîtier (21) qui comporte une entrée (22) d'alimentation pour recevoir ledit liquide et une sortie (23) d'alimentation pour fournir le liquide reçu dans une conduite (11) d'alimentation de l'organe de façon à amortir les pulsations dans la conduite (11) et un deuxième boîtier (31) distinct dudit premier boîtier et qui comporte une entrée (32) de récupération pour recevoir une portion de liquide non utilisé par l'organe et une sortie (33) de récupération pour permettre de réutiliser la portion de liquide reçue, **caractérisé en ce que** le premier boîtier (21) comporte une première paroi (26), une deuxième paroi (27), et une troisième paroi (30) adossée au deuxième boîtier (31), et **en ce que** le deuxième boîtier (31) comporte une paroi accolée à la troisième paroi (30) du premier boîtier (21).

2. Dispositif selon la revendication 1, **caractérisé en ce que** le premier boîtier (21) comporte une partie supérieure (24) dans laquelle peut se former une poche de gaz au-dessus du liquide reçu, alternativement comprimée et décomprimée par lesdites pulsations.

3. Dispositif selon l'une des revendications 1 ou 2, **caractérisé en ce que** le deuxième boîtier (31) comporte une partie supérieure (34) dans laquelle débouchent ladite entrée (32) de récupération et ladite sortie (33) de récupération.

4. Dispositif selon la revendication 3, **caractérisé en ce que** la partie supérieure (34) comprend un moyen (36) de fixation sur un support de suspension de l'organe alimenté.

5. Dispositif selon l'une des revendications précédentes, **caractérisé en ce que** le premier boîtier (21) comporte une partie inférieure (25) dans laquelle débouche ladite entrée (22) d'alimentation sur la première paroi (26) et débouche ladite sortie (23) d'alimentation sur la deuxième paroi (27) connexe à la première paroi (26).

6. Dispositif selon l'une des revendications 4 ou 5, **caractérisé en ce que** le premier boîtier (21) contient un premier muret (28) relié à une arrête du boîtier (21) commune à la première paroi (26) et à la deuxième paroi (27) de façon à empêcher le liquide reçu par l'entrée (22) d'alimentation de sortir directement par la sortie (23) d'alimentation.

7. Dispositif selon les revendications 2 et 6, **caractérisé en ce que** la partie supérieure (24) du premier boîtier (21) contient un deuxième muret (29) en prolongement vertical du premier muret (28).

8. Dispositif selon l'une des revendications 4 à 7, **caractérisé en ce que** la partie inférieure (25) du premier boîtier (21) comprend un moyen (37) de fixation sur l'organe alimenté.

9. Dispositif selon la revendication 8, **caractérisé en ce que** le deuxième boîtier (31) comprend une partie inférieure (35) solidaire de la partie inférieure (25) du premier boîtier (21).

10. Dispositif selon l'une des revendications précédentes, caractérisé en ce chaque boîtier est obtenu par soudure laser de deux coquilles produites par injection de polyamide, de préférence de type PA6.

11. Véhicule automobile comprenant un moteur **caractérisé en ce qu'**il comprend un dispositif amortisseur de pulsations selon l'une des revendications 1 à 10 pour alimenter le moteur en carburant.

## Patentansprüche

1. Vorrichtung (10) zur Dämpfung von Pulsationen bei der Zufuhr von Flüssigkeit zu einem Fahrzeugorgan mit einem ersten Gehäuse (21), das einen Zufuhreinlass (22) zur Aufnahme der Flüssigkeit und einen Zufuhrauslass (23) zur Zufuhr der aufgenommenen Flüssigkeit zu einer Zufuhrleitung (11) des Organs aufweist, um die Pulsationen in der Leitung (11) zu dämpfen, und ein zweites Gehäuse (31), das sich vom ersten Gehäuse unterscheidet und einen Rückgewinnungseinlass (32) zur Aufnahme eines vom Organ nicht verwendeten Teils der Flüssigkeit und einen Rückgewinnungsauslass (33) zur Ermöglichung der Wiederverwendung des aufgenommenen Teils der Flüssigkeit aufweist, **dadurch gekennzeichnet, dass** das erste Gehäuse (21) eine erste Wand (26), eine zweite Wand (27) und eine am zweiten Gehäuse (31) anliegende dritte Wand (30) aufweist und dass das zweite Gehäuse (31) eine an die dritte Wand (30) des ersten Gehäuses (21) angefügte Wand aufweist.

2. Vorrichtung nach Anspruch 1, **dadurch gekennzeichnet, dass** das erste Gehäuse (21) einen oberen Teil (24) aufweist, in dem sich über der aufgenommenen Flüssigkeit eine Gastasche bilden kann, die durch die Pulsationen abwechselnd komprimiert und dekomprimiert wird.

3. Vorrichtung nach einem der Ansprüche 1 oder 2, **dadurch gekennzeichnet, dass** das zweite Gehäuse (31) einen oberen Teil (34) aufweist, in den der Rückgewinnungseinlass (32) und der Rückgewinnungsauslass (33) münden.

4. Vorrichtung nach Anspruch 3, **dadurch gekennzeichnet, dass** der obere Teil (34) ein Mittel (36) zur Befestigung an einem Aufhängungsträger des versorgten Organs umfasst.

5. Vorrichtung nach einem der vorangehenden Ansprüche, **dadurch gekennzeichnet, dass** das erste Gehäuse (21) einen unteren Teil (25) aufweist, in den der Zufuhreinlass (22) an der ersten Wand (26) mündet und der Zufuhrauslass (23) an der mit der ersten Wand (26) verbundenen zweiten Wand (27) mündet.

6. Vorrichtung nach einem der Ansprüche 4 oder 5, **dadurch gekennzeichnet, dass** das erste Gehäuse (21) eine erste Trennwand (28) enthält, die mit einem der ersten Wand (26) und der zweiten Wand (27) gemeinsamen Steg des Gehäuses (21) verbunden ist, um zu verhindern, dass die durch den Zufuhreinlass (22) aufgenommene Flüssigkeit direkt durch den Zufuhrauslass (23) austritt.

7. Vorrichtung nach einem der Ansprüche 2 und 6, **dadurch gekennzeichnet, dass** der obere Teil (24) des ersten Gehäuses (21) eine zweite Trennwand (29) in vertikaler Verlängerung der ersten Trennwand (28) enthält.

8. Vorrichtung nach einem der Ansprüche 4 bis 7, **dadurch gekennzeichnet, dass** der untere Teil (25) des ersten Gehäuses (21) ein Mittel (37) zur Befestigung am versorgten Organ umfasst.

9. Vorrichtung nach Anspruch 8, **dadurch gekennzeichnet, dass** das zweite Gehäuse (31) einen unteren Teil (35) umfasst, der fest mit dem unteren Teil (25) des ersten Gehäuses (21) verbunden ist.

10. Vorrichtung nach einem der vorangehenden Ansprüche, **dadurch gekennzeichnet, dass** jedes Gehäuse durch Laserschweißen von zwei durch Einspritzen von Polyamid, vorzugsweise vom Typ PA6, hergestellten Schalen erhalten wird.

11. Kraftfahrzeug mit einem Motor, **dadurch gekennzeichnet, dass** es eine Vorrichtung zum Dämpfen von Pulsationen nach einem der Ansprüche 1 bis 10 zur Versorgung des Motors mit Kraftstoff aufweist.

## Claims

1. Device (10) for damping surge in the supply of liquid to a vehicle component comprising a first housing (21) which has a supply inlet (22) to receive said liquid and a supply outlet (23) for supplying the liquid received to a supply pipe (11) of the member in such a way as to damp the surge in the pipe (11), and a second housing (31) distinct from said first housing and which comprises a recover inlet (32) to receive a portion of liquid not used by the member and a recover outlet (33) to allow the received portion of liquid to be reused, **characterized in that** the first housing (21) comprises a first wall (26) and a second wall (27) and a third wall (30) backing onto the second housing (31), and **in that** the second housing (31) comprises a wall backing onto the third wall (30) of the first housing (21).

2. Device according to Claim 1, **characterized in that** the first housing (21) comprises an upper part (24) in which a pocket of gas can form above the liquid received, this pocket being alternately compressed and decompressed by said surge.

3. Device according to one of Claims 1 and 2, **characterized in that** the second housing (31) comprises an upper part (34) into which said recovery inlet (32) and said recovery outlet (33) open.

4. Device according to Claim 3, **characterized in that** the upper part (34) comprises a means (36) of attachment to a suspension support of the member being supplied.

5. Device according to one of the preceding claims, **characterized in that** the first housing (21) comprises a lower part (25) into which said supply inlet (22) opens on the first wall (26) and into which said supply outlet (23) opens on the second wall (27) connected to the first wall (26).

6. Device according to one of Claims 4 and 5, **characterized in that** the first housing (21) contains a first low wall (28) connected to a corner of the housing (21) that is common to the first wall (26) and to the second wall (27) so as to prevent the liquid received via the supply inlet (22) from exiting directly via the supply outlet (23).

7. Device according to Claims 2 and 6, **characterized in that** the upper part (24) of the first housing (21) contains a second low wall (29) in the continuation of the first low wall (28).

8. Device according to one of Claims 4 to 7, **characterized in that** the lower part (25) of the first housing (21) comprises a means (37) of attachment to the member being supplied.

9. Device according to Claim 8, **characterized in that** the second housing (31) comprises a lower part (35) solidly attached to the lower part (25) of the first housing (21).

10. Device according to one of the preceding claims, **characterized in that** each housing is obtained by laser welding two shells produced by injection moulding of polyamide, preferably of type PA6.

11. Motor vehicle comprising an engine, **characterized in that** it comprises a surge damping device according to one of Claims 1 to 10 for supplying the engine with fuel.
